Europäisches Patentamt

European Patent Office

Office européen des brevets

(11) Veröffentlichungsnummer: **0 202 541**
**B1**

(12) **EUROPÄISCHE PATENTSCHRIFT**

(45) Veröffentlichungstag der Patentschrift: **18.07.90**

(21) Anmeldenummer: **86106239.6**

(22) Anmeldetag: **07.05.86**

(51) Int. Cl.⁵: **F 16 D 51/32**

(54) Trommelbremse mit drei Bremsbacken.

(30) Priorität: **15.05.85 DE 8514496 u**

(43) Veröffentlichungstag der Anmeldung:
**26.11.86 Patentblatt 86/48**

(45) Bekanntmachung des Hinweises auf die
Patenterteilung:
**18.07.90 Patentblatt 90/29**

(84) Benannte Vertragsstaaten:
**DE FR GB IT**

(56) Entgegenhaltungen:
**DE-A-2 515 307**
**US-A-2 131 369**
**US-A-2 161 493**
**US-A-2 365 715**

(73) Patentinhaber: **LUCAS INDUSTRIES public limited company**
**Great King Street**
**Birmingham, B19 2XF West Midlands (GB)**

(72) Erfinder: **Rath, Heinrich-Bernhard**
**Sebastian-Kneipp-Strasse 73a**
**D-5414 Vallendar (DE)**

(74) Vertreter: **Wuesthoff, Franz, Dr.-Ing. et al**
**Wuesthoff & Wuesthoff Patent- und**
**Rechtsanwälte Schweigerstrasse 2**
**D-8000 München 90 (DE)**

## Beschreibung

Die Erfindung betrifft eine Trommelbremse mit drei Bremsbacken, die hydraulisch und/oder mechanisch beaufschlagbar sind.

Aus der US—A—2 365 715 ist eine derartige Trommelbremse bekannt, bei der die drei Bremsbacken parallel und unabhängig voneinander jeweils hydraulisch beaufschlagbar sind. Hinsichtlich ihrer Auflauf- und Ablaufeigenschaften unterscheiden sich die drei Bremsbacken untereinander nicht.

Die Bremsung eines Fahrzeuges ist durch die Größe des Reibwertes zwischen den Reifen und der Straße begrenzt. Um bei kritischen Bremsungen diesen physikalisch vorgegebenen Grenzwert möglichst weitgehend auszuschöpfen, sollte eine hydraulische Bremsanlage derart ausgelegt sein, daß der Pedaldruck und gegebenenfalls die Bremskraftverstärkung derart umgesetzt werden, daß die auf die Bremsbacken wirkende Spannkraft ein Bremsmoment erzeugt, welches sich dem Bereich der Grenzhaftung zwischen Reifen und Straße nähert.

Das momentan wirksame Bremsmoment ist eine komplizierte Funktion nicht nur der hydraulisch (und gegebenenfalls mit einem Bremskraftverstärker) erzeugten Spannkraft, sondern hängt auch von anderen Parametern ab, wie den geometrischen Abmessungen der Reibflächen, die sich u.a. auch durch die Wärmeentwicklung während des Bremsens ändern, oder auch vom Reibwert (Reibungskoeffizienten) zwischen den Bremsbacken und der Bremstrommel.

Der Quotient aus der wirksamen Umfangskraft und der hydraulisch oder mechanisch erzeugten Spannkraft wird allgemein als Kennwert "C*" bezeichnet. Der so definierte Kennwert C* ist eine Funktion des genannten Reibwertes $\mu$ zwischen Bremsbacken und Trommel. Die Steigung dieser Funktion $C*(\mu)$ wird als Empfindlichkeit $E_o$ bezeichnet. Es gilt also definitionsgemäß:

$$E_o = \frac{dC}{d\mu}$$

Die Empfindlichkeit $E_o$ gibt die Änderung des Kennwertes mit dem Reibwert $\mu$ an. Ist der Kennwert eine steil ansteigende Funktion des Reibwertes $\mu$, so ergibt sich eine große Empfindlichkeit $E_o$; die Bremse spricht sehr "hart" an. Der Reibwert $\mu$ ist seinerseits unter anderem eine Funktion der Temperatur der Reibflächen.

Der Kennwert berechnet sich für symmetrische Bremsbacken in erster Näherung wie folgt:

$$C* \text{auflaufend} = \frac{K_1 \times \mu}{K_2 - \mu}$$

$$C* \text{ablaufend} = \frac{K_1 \times \mu}{K_2 + \mu}$$

$K_1$ und $K_2$ sind empirische Werte, die sich aus der Geometrie der Bremsbacken ableiten lassen und etwa als konstant anzusehen sind.

Aus den vorstehenden Gleichungen ergibt sich, daß der Kennwert C* einer auflaufenden Bremsbackenanordnung wesentlich größer ist als der Kennwert C* einer ablaufenden Bremsbackenanordnung.

Um bei Trommelbremsen ein hohes Bremsmoment bei geringer Spannkraft zu erzeugen, ist ein hoher Kennwert C* erforderlich, was allerdings auch eine hohe Empfindlichkeit $E_o$ bedingt. Diese hohe Empfindlichkeit ist aufgrund der mit ihr einhergehenden Härte im Ansprechverhalten der Bremse wenig erwünscht.

Neben der hydraulischen Bremsbetätigung ist üblicherwiese noch eine mechanische Betätigung der Bremse mit einer Vorrichtung vorgesehen, die gewöhnlich als Handbremse oder allgemeiner als Feststell- oder Parkbremse bezeichnet wird, de sie selbstverständlich auch fußbetätigt sein kann. Aus Kostengründen sind Feststellbremsen in der Regel ohne Hilfskraft-Aggregate ausgelegt. Die vom Fahrer aufgebrachte Muskelkraft soll ausreichend sein, um die erforderliche Bremswirkung einzuleiten.

Während also bei einer hydraulischen Bremsung in der Regel geringe Kennwertschwankungen (Empfindlichkeiten) erwünscht sind, ist umgekehrt hinsichtlich der mechanischen Feststellbremse eine hohe Empfindlichkeit hinnehmbar, da hiermit leicht ein hoher Kennwert C* erreicht wird, welcher bei vorgegebener Maximal-Spannkraft ein relativ hohes Bremsmoment erzeugt.

Der Erfindung liegt die Aufgabe zugrunde, eine Trommelbremse zu schaffen, die bei hydraulischer Bremsbetätigung zumindest in Vorwärts-Fahrtrichtung eine relativ geringe Empfindlichkeit aufweist, während bei einer mechanischen Bremsung ein höherer Kennwert erreicht wird. Auch soll die Trommelbremse einen einfachen Aufbau aufweisen und dementsprechend kostengünstig herstellbar sein.

Erfindungsgemäß wird diese Aufgabe dadurch gelöst, daß ein erster und ein zweiter, hydraulisch beaufschlagbarer Bremsbakken in Vorwärts-Fahrtrichtung jeweils ablaufend gelagert sind und daß der dritte Bremsbacken bei mechanischer Bremsung zusammen mit zumindest einem der anderen Bremsbacken derart beaufschlagt ist, daß sowohl in Vorwärts- als auch in Rückwärts-Fahrtrichtung jeweils einer der Bremsbacken ab- und einer auflaufend gelagert ist.

Nach den eingangs gegebenen Erläuterungen weisen ablaufende Bremsbackenanordnungen einen kleineren Kennwert C* und auch eine geringere Kennwertschwankung auf als auflaufende Bremsbackenanordnungen. Die Erfindung macht sich diese Erkenntnis zu Nutze, indem bei der hydraulischen Bremsung in Vorwärts-Fahrtrichtung, also der gewöhnlichen Fuß-Bremsung, zwei ablaufend gelagerte Bremsbacken wirksam sind, wohingegen bei einer Handbremsung auch eine Bremsbacke beteiligt ist, die auflaufend gelagert ist, und zwar sowohl in Rückwärts- als auch in Vorwärts-Fahrtrichtung.

Der Fahrer genießt also bei einer hydraulischen Bremsung eine relativ geringe Empfindlichkeit, wobei gegebenenfalls ein Bremskraftverstärker eingesetzt sein kann, während bei einer Handbremsung aufgrund der hohen Empfindlichkeit die Körperkraft mit großem Wirkungsgrad in ein Bremsmoment umgesetzt wird.

Vorteilhafte Weiterbildungen der Erfindung sind in den Unteransprüchen beschrieben.

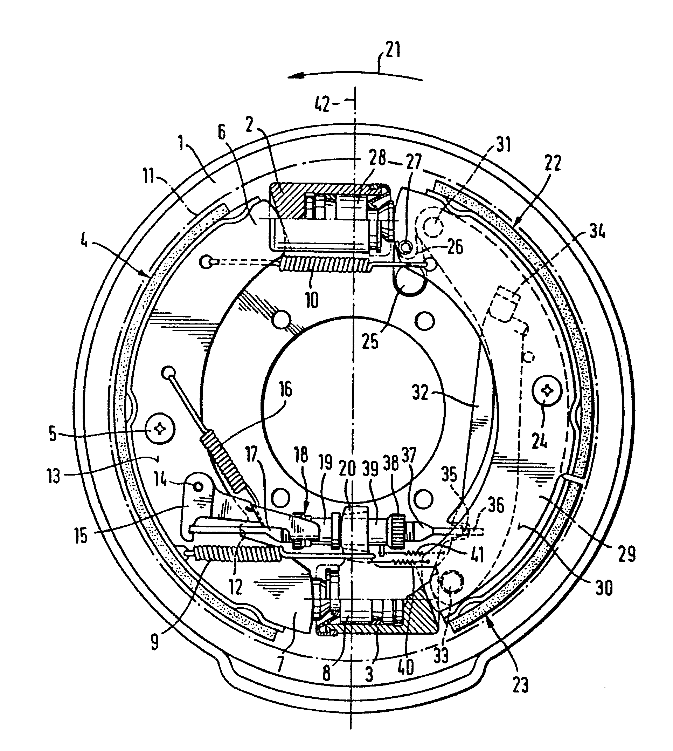

Nachfolgend wird die Erfindung anhand der Zeichnung näher erläutert, welche ein Ausführungsbeispiel einer erfindungsgemäßen Trommelbremse schematisch im Schnitt zeigt.

Auf einer Ankerplatte 1 sind zwei einseitig wirkende Radbremszylinder 2, 3 befestigt. Ein links dargestellter erster Bremsbacken 4 wird in bekannter Weise über eine Stift/Feder-Verbindung 5 auf die Ankerplatte 1 gedrückt. Das obere Ende 6 des Bremsbackens 4 stützt sich an dem Radbremszylinder 2 ab. Das untere Ende 7 des Bremsbackens 4 leitet die von dem Kolben 8 des Radbremszylinders 3 erbrachte Spannkraft in den Bremsbacken 4 ein.

Zwei Rückstellfedern 9, 10 ziehen den Bremsbacken 4 nach Druckentlastung von der Bremstrommel 11 ab.

Im Stegblech 13 des Bremsbackens 4 ist ein Anschlag 12 vorgesehen, welcher mit einer bekannten Nachstelleinrichtung zusammenwirkt.

Die Nachstelleinrichtung besteht aus einem auf dem Stegblech 13 des Bremsbackens 4 um eine Spannhülse 14 drehbar gelagerten Nachstellhebel 15, einer Rückstellfeder 16, einer an einem Ende gabelförmig ausgeformten Druckstange 17, einem Ritzel 18 und einer Druckhülse 19. Die Druckhülse 19 stützt sich nach rechts an einem zur Ankerplatte 1 ortsfesten Anschlag 20 ab. Dieser Anschlag 20 kann ein Teil des Radbremszylinders 3 sein. Nach links kann sich die Druckhülse 19 aus dem Anschlag 20 herausbewegen.

Erfolgt eine Bremsung in Vorwärts-Fahrtrichtung, welche durch den Pfeil 21 angedeutet ist, so ist der Bremsbacken 4 ablaufend wirksam, d.h. weist einen geringen Kennwert auf. Bei Rückwärts-Fahrtrichtung ist der Bremsbacken 4 auflaufend wirksam und dementsprechend ist sein Kennwert hoch.

In der Figur sind rechts ein zweiter und ein dritter Bremsbacken 22 und 23 dargestellt.

Der zweite Bremsbacken 22 wird in bekannter Weise mittels einer Stift/Feder-Verbindung 24 auf die Ankerplatte 1 gedrückt. Der Stift durchragt eine Aussparung in einem darunterliegenden Stegblech 29 des dritten Bremsbackens 23. Die Nachstellung des zweiten Bremsbackens 22 kann mit einer Nachstelleinrichtung der vorstehend beschriebenen Art erfolgen. Gemäß der Figur ist aber eine einfache Reibnachstellung vorgesehen, welche eine mit der Ankerplatte 1 reibschlüssig drehbar verbundene Platte 25 aufweist, die mit einer Ausnehmung 26 eine in dem Stegblech 30 des Bremsbackens 22 eingepreßte Spannhülse 27 mit Spiel umgreift. Bei das Spiel überschreitender Bewegung des Bremsbackens 22 wird die Platte 25 mitgenommen und verstellt.

Bei hydraulischer Beaufschlagung der Bremse wird über den Kolben 28 im Radbremszylinder 2 eine Spannkraft in den zweiten Bremsbacken 22 eingeleitet. Bei Vorwärts-Fahrtrichtung gemäß dem Pfeil 21 wird auch der zweite Bremsbacken 22 ablaufend wirksam, hat also einem entsprechend geringen Kennwert. Bei Bremsung in Rückwärts- Fahrtrichtung ist der zweite Bremsbacken 22 hingegen auflaufend gelagert, so daß er einen hohen Kennwert aufweist.

Der dritte Bremsbacken 23 liegt mit seinem Stegblech 29 größtenteils zwischen dem Stegblech 30 des zweiten Bremsbackens 22 und der Ankerplatte 1. Das Stegblech 29 ist auf einem auf der Ankerplatte 1 aufgenieteten Stift 31 drehbar gelagert.

An dem in der Zeichnung unteren Endabschnitt des dritten Bremsbackens 23 ist ein Handbremshebel 32 auf dem Stegblech 29 drehbar mittels einer Nietverbindung 33 befestigt. Der Handbremshebel 32 weist an seinem oberen Endabschnitt eine für das Einhängen eines Bremsseilzuges ausgebildete Abkröpfung 34 auf. Naheder Nietverbindung 33 ist der Handbremshebel 32 mit einer Aussparung 35 versehen, in welche ein gabelförmig ausgebildetes Ende 36 einer Druckstange 37 eingreift. Die Druckstange 37 ist über ein als Anschlag wirkendes Ritzel 38 in einer Druckhülse 39 gelagert.

Bei einer mechanischen Bremsung, also einer Handbremsbetätigung, werden sowohl der erste Bremsbacken 4 als auch der dritte Bremsbacken 23 in Reibeingriff mit der Bremstrommel 11 gebracht. Die Handbremse wirkt somit in beiden Fahrtrichtungen als Simplexbremse: Bei Vorwärts-Fahrtrichtung wirkt der erste Bremsbacken 4 ablaufend und der dritte Bremsbacken 23 auflaufend. Bei Rückwärts-Fahrtrichtung hingegen wirkt der erste Bremsbacken 4 auflaufend und der dritte Bremsbacken 23 ablaufend.

Die Nachstellung des dritten Bremsbackens 23 erfolgt manuell über das Ritzel 38. Da der Verschleiß des dritten Bremsbackens 23 als gering vorausgesetzt werden kann, ist eine automatische Nachstellvorrichtung nicht erforderlich.

Der zweite Bremsbacken 22 wird über die Rückstellfeder 10 und eine weitere Rückstellfeder 40 nach einer Entlastung des Hydraulikdruckes von der Bremstrommel 11 zurückgezogen. Nach Entlastung des dritten Bremsbackens 23 wird dieser durch eine Rückstellfeder 41 von der Bremstrommel 11 zurückgezogen. Die Rückstellfeder 40 verbindet den zweiten Bremsbacken 23 mit dem Anschlag 20. Die Rückstellfeder 41 verbindet den dritten Bremsbacken 22 mit der Druckhülse 39.

Durch die Ausbildung der Handbremse als Simplexbremse ist ihr Kennwert deutlich höher als derjenige bei einer hydraulischen Bremsung in Vorwärts-Fahrtrichtung.

Aus dem Vorstehenden ergibt sich, daß die Trommelbremse bei hydraulischer Beaufschlagung in Vorwärts-Fahrtrichtung einen relativ stabilen Kennwert, d.h. eine geringe Empfindlichkeit aufweist, während die Handbremse in beiden Fahrtrichtungen als Simplexbremse wirkt und somit jeweils einen höheren Kennwert besitzt.

## Patentansprüche

1. Trommelbremse mit drei Bremsbacken (4, 22, 23), die hydraulisch und/oder mechanisch beaufschlagbar sind, dadurch gekennzeichnet, daß ein erster und ein zweiter, hydraulisch beaufschlagbarer Bremsbacken (4, 22) in Vorwärts-Fahrtrichtung (21) jeweils ablaufend gelagert sind und daß der dritte Bremsbacken (23) bei mechanischer Bremsung zusammen mit zumindest einem der anderen Bremsbacken (4, 22) derart beaufschlagt ist, daß sowohl in Vorwärts- als auch in Rückwärts-Fahrtrichtung jeweils einer der Bremsbacken (23 und 4 bzw. 22) ab- und einer auflaufend gelagert ist.

2. Trommelbremse nach Anspruch 1, dadurch gekennzeichnet, daß bei hydraulischer Beaufschlagung der Bremse nur der erste und der zweite Bremsbacken (4 bzw. 22) betätigt sind.

3. Trommelbremse nach einem der Ansprüche 1 oder 2, dadurch gekennzeichnet, daß bei mechanischer Beaufschlagung der Bremse der dritte und der erste Bremsbacken (23 bzw. 4) betätigt sind.

4. Trommelbremse nach einem der vorhergehenden Ansprüche, dadurch gekennzeichnet, daß bei mechanischer Beaufschlagung in Vorwärts-Fahrtrichtung (21) der erste Bremsbacken (4) ablaufend und der dritte Bremsbacken (23) auflaufend gelagert sind, während in Rückwärts-Fahrtrichtung der erste Bremsbacken (4) auf- und der dritte Bremsbacken (23) ablaufend gelagert sind.

5. Trommelbremse nach einem der vorhergehenden Ansprüche, dadurch gekennzeichnet, daß der erste Bremsbacken (4) eine wirksame Reibfläche mit der Trommel (11) aufweist, die zumindest annähernd so groß ist wie die wirksamen Reibflächen des zweiten und dritten Bremsbackens (22, 23) zusammen.

6. Trommelbremse nach Anspruch 5, dadurch gekennzeichnet, daß die Reibflächen der drei Bremsbacken (4, 22, 23) in Umfangrichtung nicht überlappend angeordnet sind, wobei die Reibfläche des dritten Bremsbackens (23) kleiner ist als die des zweiten Bremsbackens (22).

7. Trommelbremse nach einem der vorhergehenden Ansprüche, dadurch gekennzeichnet, daß der erste Bremsbacken (4) einerseits und der zweite und dritte Bremsbacken (22, 23) andererseits beiderseits einer Symmetrieachse (42) gegenüberliegend angeordnet sind.

## Revendications

1. Frein à tambour avec trois sabots de frein (4, 22, 23), qui peuvent être sollicités hydrauliquement et/ou mécaniquement, caractérisé en ce qu'un premier et un second sabots de frein (4, 22), pouvant être actionnés hydrauliquement, sont respectivement sollicités vers le bas dans le sens de marche avant (21), et en ce que le troisième sabot de frein (23), lors d'un freinage mécanique, est actionné en même temps qu'au moins un des autres sabots de frein (4, 22) de telle sorte qu'aussi bien dans le sens de marche avant que dans le sens de marche arrière, respectivement un des sabots de frein (23 et 4 ou 22) est sollicité vers le bas et un vers le haut.

2. Frein à tambour selon la revendication 1, caractérisé en ce que, en cas de sollicitation hydraulique des freins, seulement le premier et le second sabots de frein (4) et (22) sont actionnés.

3. Frein à tambour selon une des revendications 1 ou 2, caractérisé en ce que, en cas de sollicitation mécanique des freins, le troisième et le premier sabots de frein (23 et 4) sont actionnés.

4. Frein à tambour selon une des revendications précédentes, caractérisé en ce que, lors d'un actionnement mécanique dans le sens de marche avant (21), le premier sabot de frein (4) est sollicité vers le bas et le troisième sabot de frein (23) vers le haut alors que, dans le sens de marche arrière, le premier sabot de frein (4) est sollicité vers le haut et le troisième sabot de frein (23) vers le bas.

5. Frein à tambour selon une des revendications précédentes, caractérisé en ce que le premier sabot de frein (4) comporte une surface de friction coopérant avec le tambour (11) et qui est au moins approximativement aussi grande que les surfaces de friction actives des second et troisième sabots de frein (22, 23).

6. Frein à tambour selon la revendication 5, caractérisé en ce que les surfaces de friction des trois sabots de frein (4, 22, 23) sont disposées de façon à ne pas se chevaucher dans la direction circonférentielle, le surface de friction du troisième sabot de frein (23) étant plus petite que celle du second sabot de frein (22).

7. Frein à tambour selon une des revendications précédentes, caractérisé en ce que le premier sabot de frein (4) d'une part et les second et troisième sabots de frein (22, 23) d'autre part, sont disposés en opposition mutuelle de part et d'autre d'un axe de symétrie (42).

## Claims

1. A drum brake including three brake shoes (4, 22, 23) adapted to be pressurized hydraulically and/or mechanically, characterized in that first and second hydraulically operable brake shoes (4, 22) are supported trailingly in the forward travelling direction (21), and that, upon mechanical braking, the third brake shoe (23) is pressurized together with at least one of the other brake shoes (4, 22) such that one each of the brake shoes (23 and 4 or 22) is supported trailingly and one is supported leadingly, both in forward and backward travelling directions.

2. The drum brake as claimed in claim 1, characterized in that only the first and second brake shoes (4, 22) are actuated upon hydraulic pressurization of the brake.

3. The drum brake as claimed in claim 1 or 2, characterized in that the third and first brake shoes (23, 4) are actuated upon mechanical pressurization of the brake.

4. The drum brake as claimed in one of the preceding claims, characterized in that upon mechanical actuation in forward travelling direction (21) the first brake shoe (4) is supported trailingly and the third brake shoe (23) is supported leadingly, while the first brake shoe (4) is supported leadingly and third brake shoe (23) trailingly in the backward travelling direction.

5. The drum brake as claimed in one of the preceding claims, characterized in that the first brake shoe (4) has an effective frictional surface with the drum (11) at least approximately as great as the effective frictional surfaces of the second and third brakes shoes (22, 23) together.

6. The drum brake as claimed in claim 5, characterized in that the frictional surfaces of the three brake shoes (4, 22, 23) are arranged not to overlap in circumferential direction, with the frictional surface of the third brake shoe (23) being smaller than that of the second brake shoe (22).

7. The drum brake as claimed in one of the preceding claims, characterized in that the first brake shoe (4), on the one hand, and the second and third brake shoes (22, 23), on the other hand, are disposed opposite each other at either side of an axis of symmetry (42).